## Europäisches Patentamt

## European Patent Office

## Office européen des brevets

(19)

(11) Publication number: **0 372 640**

**A1**

(12) # EUROPEAN PATENT APPLICATION

(21) Application number: **89203051.1**

(22) Date of filing: **30.11.89**

(51) Int. Cl.5: **G08B 3/10, G08B 26/00**

(30) Priority: **05.12.88 NL 8802989**

(43) Date of publication of application:
**13.06.90 Bulletin 90/24**

(84) Designated Contracting States:
**DE FR GB NL SE**

(71) Applicant: **Ericsson Paging Systems B.V.**
**Nautilusstraat 3**
**NL-7821 AG Emmen(NL)**

(72) Inventor: **Steen, Petrus Antonius Johannes**
**31, Limietweg**
**NL-7884 TA Barger Compascuum(NL)**

(74) Representative: **van der Arend, Adrianus G.A.,**
**Ir. et al**
**EXTERPATENT B.V. P.O. Box 90649**
**NL-2509 LP The Hague(NL)**

(54) **Personal paging system with determination of the status of a paging unit and of a user thereof.**

(57) A personal paging system comprising a central paging transmitter, a central receiver and at least one portable pager, the central transmitter being able to transmit a paging signal comprising a selectable identification code. A portable pager receiving said paging signal will compare the identification code received by said signal with an identification code assigned and stored in said unit. In case of equality the pager will signal the user of the pager about this. The user may transmit a report signal comprising said stored identification code. The central receiver is able to receive such report signal and to separate the identification code therefrom. The report signal may further comprise a localisation code stored in the pager upon receipt of a localisation signal comprising said localisation code from a localisation transmitter, of a number of localisation transmitters, said localisation code is assigned to. The report signal may also comprise an inquiry code. Dependent on the value of the inquiry code the pager will send said report signal automatically or the user must response within a certain time limit. If not responded in time the pager will transmit a report signal comprising an alarm code upon which the central part enables the generation of an alarm signal, as in the case that no proper report signal is received within another certain time limit from transmission of said paging signal.

Fig. 1.

## Personal paging system with determination of the status of a paging unit and of a user thereof.

The invention relates to a personal paging system comprising an exchange with a paging transmitter for transmitting a paging signal, which is obtained by modulation of a first carrier wave signal by a first frequency with a paging message, which contains an identification code to be selected before transmission, and at least one paging unit, which can be carried by a person, with first receiving means for receiving the paging signal and for separating the transmitted identification code therefrom, memory means for storing therein an identification code assigned to the unit, comparison means for comparing the transmitted identification code with the assigned identification code, signalling means for generating a signalling signal depending on the result of the comparison, which signal is detectable by a person, and transmitting means, connected to the actuating means, for transmitting a report signal, which is obtained by modulation of a second carrier wave signal with a second frequency with a report message, a receiver in the exchange being suitable for receiving the report signal and for separating the report message therefrom and further processing this message.

A personal paging system of this type is known in practice. The ability to transmit a report signal can be useful for enabling the status of a paging unit and of a user thereof to be checked from the exchange. With the known system, the report message consists of a speech signal. This has the drawback that a user of a paging unit who is paged must acknowledge by speaking. This takes a relatively long time, which in some situations, for example in the case of an accident, can be undesirable, or because insufficient time is available, which can lead to rapidly spoken messages which are difficult to understand. Moreover, a call-back using speech can disturb other people in the vicinity of the user of the unit. Moreover, the speech signal and the content of the spoken message give no guarantee with regard to the identity of the user of the paging unit. Furthermore, the spoken report message cannot be processed automatically by a data processing unit.

The aim of the invention is to eliminate the drawbacks of the known personal paging system.

To this end, a personal paging system of the type specified in the preamble is characterized according to the invention in that the report message is a digital message which contains the stored assigned identification code. By this means, a short transmission time is obtained, the identity of the paging unit which calls back is guaranteed, persons other than the user of the paging unit are not disturbed by the transmission of the report message and automated processing of the report message is possible in the exchange. Because the digital report signal can be very short, for example 300 ms, fast communication is possible with a high message transmission rate by the exchange and interference with other messages will be minimized.

Preferably, the system is such that the paging message contains a query code and that the transmitting means of the paging unit transmit an report signal when the stored identification code and the identification code of a received paging message are identical and when the query code of the paging message has a first predetermined value. By this means, a paging unit will automatically transmit a report signal without a user of the paging unit having to operate the actuating means. This can be useful when, in accordance with another characteristic of the invention, the report message also contains the status of the paging unit and the exchange carries out a checking function.

Another advantageous embodiment is such that the paging message contains a query code and that the transmitting means of the paging unit transmit a report message containing an alarm code when the stored identification code and the identification code of a received paging message are identical, when the query code of the paging message has a second predetermined value and when the person has not operated the unit to transmit a report signal within a first predetermined time from receiving such a paging message and that the exchange generates an alarm signal on receipt of the alarm code.

When the exchange receives a report message containing such an alarm code, it can deduce therefrom that the paging unit is functioning satisfactorily but that the user of the unit has not reacted to the paging message because, for example, he or she is unconscious as a result of an accident.

In order to prevent interference of report signals transmitted by different paging units, whether or not in response to received paging messages, it is preferable that, after equality has been established between the received and stored identification codes, the control circuit blocks the transmission of a report signal after a second predetermined period from the establishment of the equality has elapsed until a subsequent establishment of the equality.

Another embodiment is such that the exchange generates an alarm signal when it has not received a report signal belonging to the identification code of the paging message within a third predetermined time after transmitting a paging message with a query code with the predetermined value. When the exchange has not received the corresponding report signal within the third predetermined time, it can deduce therefrom that the unit paged has not reacted at all, for example as a consequence of electromagnetic screening or due to a defect as a consequence of, for example, an accident.

Preferably, the report message contains information on the status of the paging unit. By this means the exchange can check the various paging units and the users thereof. The users do not have to be actively involved in this.

The status information can relate to the position of the paging unit. When, for example, the paging unit is not in a normal vertical position but in a horizontal position, the exchange can deduce herefrom that the unit has been lost by the user or that the user is in a horizontal position, for example as a consequence of an accident.

The status information can also relate to the degree to which the paging unit moves or has moved.

The status information can also relate to a constituent of a medium surrounding the unit, for example the presence of water, or the presence of smoke or a chemical substance in the air surrounding the unit. A system of this type is, for example, suitable for use by users who clean ships.

Another advantageous embodiment is such that the system comprises a number of localization transmitters installed at various sites, each of which is suitable for transmitting a localization signal, which is obtained by modulation of a third carrier wave signal with a third frequency by a localization code assigned to the localization transmitter, the paging unit has second receiving means for receiving a localization signal and for separating the localization code therefrom and control means for storing the localization code in the memory, and that the report message contains the stored localization code. By this means, the exchange can monitor the position of a user of the paging unit and, if necessary, generate an alarm signal when the user is in an area to which he is not allowed access.

The memory and the control means can be suitable for storing a number of localization codes received successively and the report message can contain the stored localization codes. By this means, the exchange can monitor the route followed by a user of the paging unit.

Preferably, the memory and the control means are suitable for storing the time of receipt of the localization code with each stored localization code and the report message contains the times of receipt. By this means, the exchange can follow the movement of a user of the paging unit even more completely, that is to say as a function of time.

The invention is explained with reference to the drawings. In the drawings:

Fig. 1 shows an embodiment of the personal paging system according to the invention;

Fig. 2 shows an electrical diagram of a first functioning of a paging unit of the personal paging system according to the invention;

Fig. 3 shows an electrical diagram of a second functioning of a paging unit of the personal paging system according to the invention;

Fig. 4 shows an electrical diagram of a supplementary functioning of a paging unit of the personal paging system according to the invention;

Fig. 5 shows an electrical diagram of a first functioning of an exchange of the personal paging system according to the invention, corresponding to the functioning of the paging unit according to Fig. 2; and

Fig. 6 shows an electrical diagram of a second functioning of the exchange of the personal paging system according to the invention, corresponding to the functioning of the paging unit according to Fig. 3.

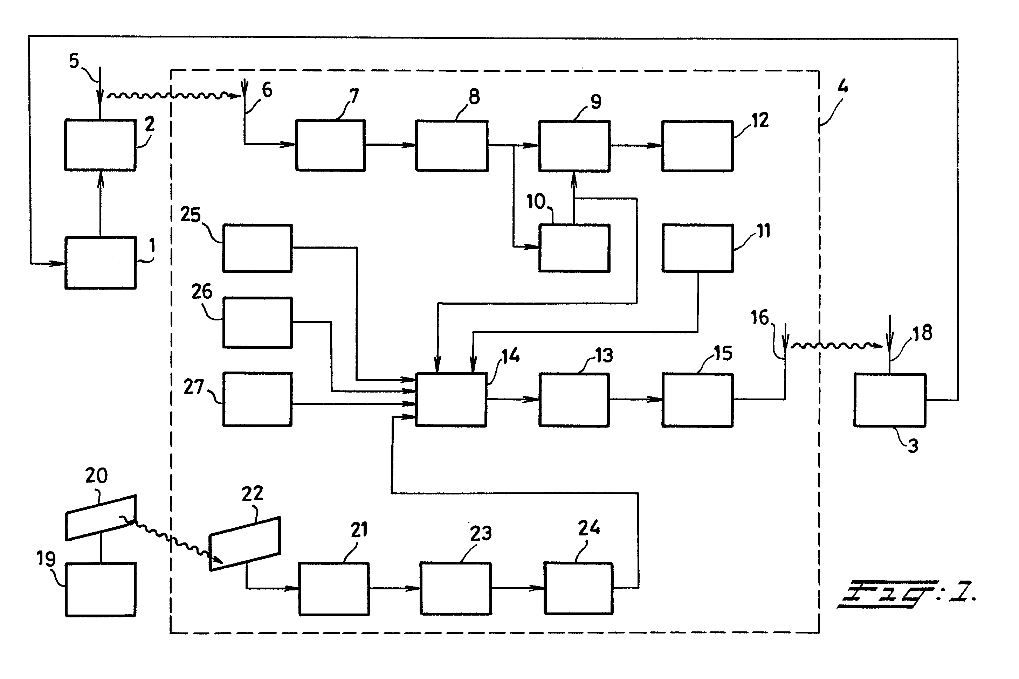

Fig. 1 shows an extensive preferred embodiment of the personal paging system according to the invention, comprising an exchange with a processing unit 1, to which a paging transmitter 2 and a report signal receiver 3 are connected, and a number of portable paging units 4.

The processing unit 1 is suitable for use for the selection of an identification code from a number of identification codes assigned to the portable units 4 individually or per group, compiling a paging message which contains at least the selected identification code, and for controlling the paging transmitter 2 in such a way that the paging transmitter 2 modulates, in particular frequency modulates, a first carrier wave with a first frequency, for example 40 MHz, by the paging message received from the processing unit 1 for transmitting a corresponding paging signal via an aerial 5 of the paging transmitter 2.

The portable unit 4 comprises an aerial 6, first receiving means with a tuning circuit and a demodulator 7 and a decoder 8, which are suitable for receiving the paging signal and for separating the paging message, transmitted by means of the paging signal, from the paging signal received. The identification code received with the paging message is compared in a comparator 9 with each of a number of identification codes which have previously been stored in a memory 10 and are assigned to the portable paging unit 4. If the received identification code and an assigned identification code are identical, a signalling element 12 is then actuated. The portable unit 4 can comprise a number of different signalling elements 12 which can be suitable for giving an optical, acoustic or mechanically detectable signal to a user of the portable unit 4.

The portable paging unit 4 also comprises a modulator 13 which receives a modulation signal from a control circuit 14 for modulation, in particular frequency modulation, of a second carrier wave for generating therewith a report signal which is transmitted via a transmitter 15 and an aerial 16.

The control circuit 14 receives control signals from actuating means 11 and an individual identification code, assigned to the portable paging unit 4, from the memory 10. By suitable operation of the actuating means 11, the user can activate the transmission section 13-17 of the portable unit 4, as a result of which control circuit 14 compiles a report message and supplies this to the modulator 13 for the transmission of the report signal containing the report message.

The receiver 3, of the exchange, with an aerial 18 is suitable for receiving the report signal transmitted by a portable unit 4 and for separating the report message therefrom. The report message received by the receiver 3 is supplied to the processing unit 1 for further processing. A number of receivers 3 can be installed distributed over the region within which the portable units 4 are located. By this means, the transmitting power of the transmitter 15 can be restricted and even report signals transmitted at the same time by different portable paging units 4 within the ranges of different central receivers 3 can be received and processed by these receivers 3, so that the chance of interference of different report signals is reduced.

The central processing unit 1 can be connected to a telephone exchange.

A portable paging unit 4 can be suitable for programming therein identification codes assigned to the unit 4 from outside the paging unit 4, which identification codes are then stored in the register or the memory 10, as disclosed in Netherlands Patent Application 80.00578, which corresponds to American Patent 4,422,071.

Preferably, the personal paging system according to the invention also comprises a number of localization transmitters 19, each with an aerial 20, which can be a loop aerial, which are fitted locally, for example adjacent to doors, and which are each suitable for transmitting a localization signal which contains an individual localization code assigned to the localization transmitter. The portable paging unit 4 also comprises second receiving means 21, which are connected to an aerial 22, which can be a frame aerial, and a decoder 23, for receiving the localization signal and separating the localization code therefrom. The received localization code is stored in a memory 24. The control circuit 14 and the memory 24 can be suitable for storing a number of localization codes, and optionally also the times of receipt of the respective localization codes, in the memory 24.

The paging unit 4 can also comprise a number of sensors , for example a sensor 25 for sensing the position of the paging unit 4, a sensor 26 for sensing the degree of movement of the paging unit 4 and a sensor 27 for sensing a constituent of a medium surrounding the paging unit 4, for example water or smoke in the air.

A paging message transmitted by the exchange 1, 2, 3, 5 and 18 can be a message which, at least partially, is, for example, displayed on a screen of a display element 11 and can contain an order for a user of the paged paging unit 4 to actuate the actuating means 11 to transmit a report signal.

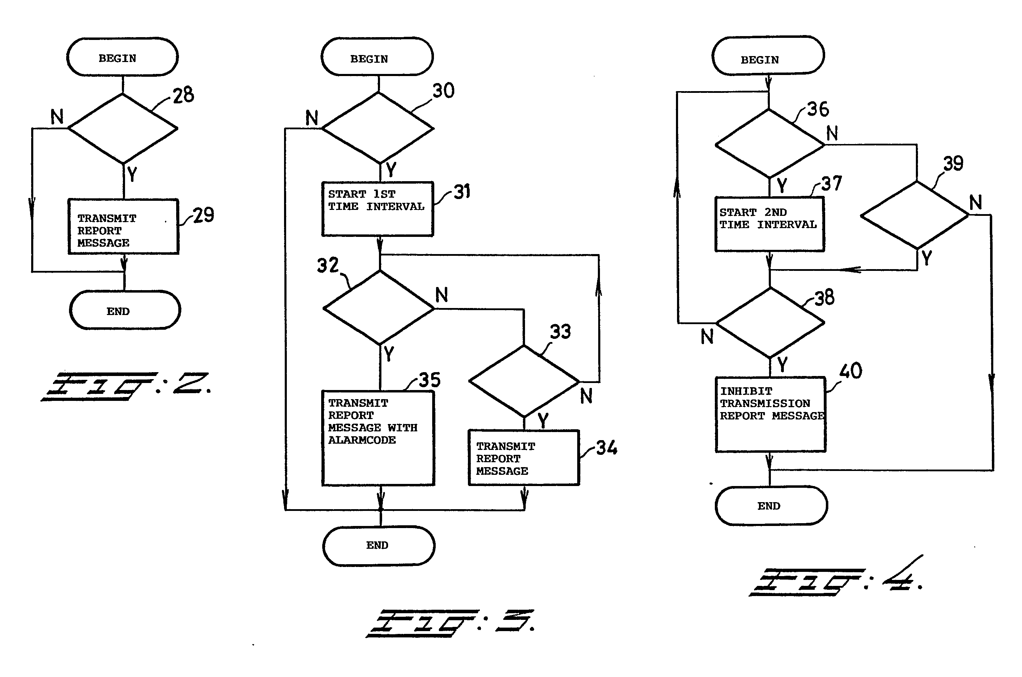

As explained below with reference to the electrical diagrams in Figures 2 to 6 inclusive, a paging message can also contain a query code to allow the paging unit 4 to function depending on the value of the query code.

The control circuit 14, which compiles the report message for the report signal, is suitable for incorporating in the report message information which originates from the localization memory 24 and from the sensors 25, 26 and 27.

In the electrical diagrams in Figures 2 to 6 inclusive, the letter "Y" represents the answer "yes" and the letter "N" represents the answer "no".

Fig. 2 shows a first functioning of a paging unit 4 of the system according to the invention. When, according to block 28, a paging message received by the paging unit 4 and intended for this paging unit 4 has a query code with a first value, the paging unit 4, according to block 29, compiles a report message and transmits this without the intervention of a user of the unit 4.

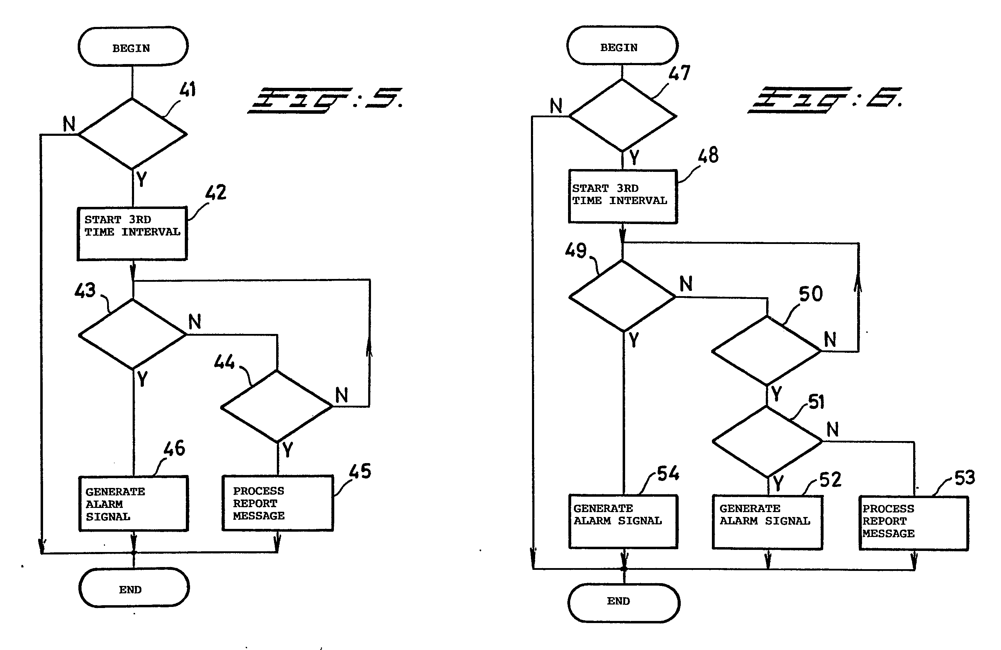

When, according to block 30, in the functioning of the paging unit 4 according to Fig. 3, the query code has a second value in stead of the first value, a first time interval is started, according to block 31. Subsequently, a check is made, according to block 32, to determine whether the first time interval has elapsed. If the time interval has not elapsed, a check is made, according to block 33, to determine whether a specific switch on the actuating means 11 has been depressed. If the switch has not been depressed, block 32 is repeated. If the switch has been depressed, a report message is transmitted according to block 34. If the first time interval elapses during the continuous repeats of the loop of block 32 and 33, a report message which contains an alarm code is transmitted according to block 35. As explained below, the exchange can generate an alarm signal on the receipt of the alarm code.

The electrical diagram according to Fig. 4 indicates a supplementary functioning for the paging unit 4 which prevents the paging unit 4 being able to transmit a report signal at arbitrary points in time so that there is interference of report signals transmitted by different paging units 4, possibly in response to paging signals. According to block 36 of Fig. 4, a check is made to determine whether a new paging message intended for the particular paging unit 4 has been received. If this is the case, a second time interval is started according to block 37. If, according to block 38, the second time interval has not yet elapsed, a new check is made, according to block 36, to determine whether a new paging message for the particular unit 4 has been received. If a new paging message is received during the various checks and during the period of the second time interval, the second time interval is started again according to block 37. If block 36 indicates that no new paging message for the particular unit 4 has been received and the second time interval has been started according to block 39, the procedure continues with block 38 to check if the second time interval has elapsed. If, according to block 38, the second time interval has elapsed, the transmission of a report message is blocked according to block 40. Blocking is maintained until, according to block 36, a new paging message for the particular unit 4 is again received.

Fig. 5 shows an electrical diagram for the functioning of the exchange 1, 2, 3, 5 and 18 for the functioning of the paging unit 4 according to Fig. 2. When, according to block 41, the exchange has transmitted a paging message with a query code with a first value, a third time interval is started according to block 42. If, according to block 43, the third time interval has not elapsed, a check is made, according to block 44, to determine whether the exchange has received a report message corresponding to the transmitted paging message. As long as this is not the case, blocks 43 and 44 are repeated. When, according to block 44, the exchange has received a report message corresponding to the transmitted paging message, the report message is further processed according to block 45. If the third time interval elapses while the blocks 43 and 44 are still being repeated, an alarm signal is generated according to block 46. The alarm signal is thus generated when the paging unit 4 has not received the paging message, for example because of screening or because of a defect in the unit, and/or a report signal transmitted by the paging unit 4 is not received by the exchange in good time or is not received properly, for example because of screening.

In the case of the functioning of the exchange in accordance with Fig. 6, a check is made, according to block 47, to determine whether a paging message transmitted by the exchange contains a query code with a second value. If this is the case, a third time interval is started according to block 48. If, according to block 49, the third time interval has not elapsed, a check is made, according to block 50, to determine whether the exchange has received a report message corresponding to the transmitted paging message. If this is not the case, the procedure reverts to the comparison in block 49. If such a report message has been received by the exchange, a check is made, according to block 51, to determine whether the report message contains an alarm code. If the report message contains an alarm code, an alarm signal is generated according to block 52. If, according to block 51, the report message does not contain an alarm code, the report message is further processed according to block 53. If it is found during the repeats of the blocks 49 and 50 that the third time interval has elapsed, an alarm signal is generated according to block 54. The exchange thus generates an alarm signal when the particular paging unit 4 has not received the paging message transmitted by the exchange, for example because of screening or because of a defect in the unit, or when a report message transmitted by the paging unit is not received in good time or is not received properly by the exchange (block 54), for example because of screening, or when the user of the paging unit has not activated the paging unit 4 in good time, within the first time interval, to transmit a report signal.

For functioning of the exchange in accordance with the diagram in Fig. 6, the third time interval is preferably at least as long as the sum of the first time interval and the time taken to transmit a report message by the paging unit and for processing thereof by the exchange.

Both for functioning of the paging unit in accordance with the diagram of Fig. 2 and for that in accordance with the diagram of Fig. 3, the second time interval is preferably equal to the sum of the first time interval and the time taken to transmit a report message.

The exchange can be suitable for transmitting the paging message with a query code with the first value or the second value, as desired. The paging unit 4 can then function in accordance with the diagrams of Figure 2 or Figure 3, depending on the value of the received query code, and the exchange can then function in accordance with each of the diagrams of Figures 5 and 6.

The processing unit 1 can also generate an alarm signal depending on the content of the report message, in particular on the status information and/or the location code.

The alarm signals generated by various causes can be different and can lead to an associated further processing by the processing unit 1.

Various modifications are possible within the scope of the invention. For example, the exchange can first try to establish communication with a paging unit a number of times before an alarm signal is generated. Furthermore, the localization memory 24 can be suitable for also storing therein the times of receipt of the localization codes and the control circuit 14 can be suitable for incorporating all stored localization codes and times of receipt in the report message. Furthermore, the paging unit 4 can have a memory containing a number of pre-stored messages which can be displayed on a screen of a display element 12 depending on the value of the query code and/or can cause a corresponding acoustic signal to be generated by a signalling element 12.

## Claims

1. Personal paging system comprising an exchange with a paging transmitter for transmitting a paging signal, which is obtained by modulation of a first carrier wave signal with a first frequency by a paging message, which contains an identification code to be selected before transmission, and at least one paging unit, which can be carried by a person, with first receiving means for receiving the paging signal and for separating the transmitted identification code therefrom, memory means for storing therein an identification code assigned to the unit, comparison means for comparing the transmitted identification code with the assigned identification code, signalling means for generating a signalling signal depending on the result of the comparison, which signal is detectable by a person, and transmitting means, connected to the actuating means, for transmitting a report signal, which is obtained by modulation of a second carrier wave signal by a second frequency with a report message, a receiver in the exchange being suitable for receiving the report signal and for separating the report message therefrom and further processing this message, characterized in that the report message is a digital message which contains the stored assigned identification code.

2. Personal paging system according to Claim 1, characterized in that the paging message contains a query code and in that the transmitting means of the paging unit transmit a report signal when the stored identification code and the identification code of a received paging message are identical and when the query code of the paging message has a first predetermined value.

3. Personal paging system according to Claim 1, characterized in that the paging message contains a query code and in that the transmitting means of the paging unit transmit a report message containing an alarm code when the stored identification code and the identification code of a received paging message are identical, when the query code of the paging message has a second predetermined value and when the person has not operated the unit to transmit a report signal within a first predetermined time from receiving such a paging message and in that the exchange generates an alarm signal on receipt of the alarm code.

4. Personal paging system according to one of the preceding claims, characterized in that after equality has been established between the received and stored identification codes, the control circuit blocks the transmission of a report signal after a second predetermined period from the establishment of the equality has elapsed until a subsequent establishment of the equality.

5. Personal paging system according to Claim 3 or 4, characterized in that the exchange generates an alarm signal when it has not received a report signal belonging to the identification code of the paging message within a third predetermined time after transmitting a paging message with a query code with the predetermined value.

6. Personal paging system according to one of the preceding claims, characterized in that the report message contains information on the status of the paging unit.

7. Personal paging system according to Claim 6, characterized in that the paging unit contains a sensor for sensing the position of the unit and in that the status information contains information on the position.

8. Personal paging system according to Claim 6 or 7, characterized in that the paging unit contains a sensor for sensing the degree of movement of the unit and in that the status information contains information on the degree of movement.

9. Personal paging system according to Claim 6, 7 or 8, characterized in that the paging unit contains a sensor for sensing a constituent of a medium surrounding the unit and in that the status information contains information on the constituent of the medium.

10. Personal paging system according to one or more of the preceding claims, characterized in that the system comprises a number of localization transmitters installed at various sites, each of which is suitable for transmitting a localization signal, which is obtained by modulation of a third carrier wave signal with a third frequency by a localization code assigned to the localization transmitter, the paging unit has second receiving means for receiving a localization signal and for separating the localization code therefrom and control means for storing the localization code in the memory, and in that the report message contains the stored localization code.

11. Personal paging system according to Claim 10, characterized in that the memory and the control means are suitable for storing a number of localization codes received successively and in that the report message contains the stored localization codes.

12. Personal paging system according to Claim 10 or 11, characterized in that the memory and the control means are suitable for storing the time of receipt of the localization code with each stored localization code and in that the report message contains the times of receipt.

Fig. 1.

EP 0 372 640 A1

BEGIN

N

Y

28

TRANSMIT
REPORT
MESSAGE

29

END

*Fig:2.*

BEGIN

N

30

Y

START 1ST
TIME INTERVAL

31

32

N

Y

33

N

Y

TRANSMIT
REPORT
MESSAGE WITH
ALARMCODE

35

TRANSMIT
REPORT
MESSAGE

34

END

*Fig:3.*

BEGIN

36

N

Y

37

39

N

Y

START 2ND
TIME INTERVAL

38

N

Y

INHIBIT
TRANSMISSION
REPORT MESSAGE

40

END

*Fig:4.*

FIG:5.

FIG:6.

BEGIN

41

START 3RD
TIME INTERVAL
42

43

44

45

GENERATE
ALARM
SIGNAL
46

PROCESS
REPORT
MESSAGE

END

BEGIN

47

START 3RD
TIME INTERVAL
48

49

50

51

GENERATE
ALARM SIGNAL
54

GENERATE
ALARM SIGNAL
52

PROCESS
REPORT
MESSAGE
53

END

EP 0 372 640 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 009 375 (WHITE) * Column 3, line 20 - column 5, line 45; figures 1-4 * | 1 | G 08 B 3/10 G 08 B 26/00 |
| A | | 2-12 | |
| X | US-A-3 984 807 (HAEMMING) * Column 1, line 40 - column 2, line 47; column 4, line 8 - column 5, line 30; figure 3 * | 1 | |
| A | | 1-12 | |
| A | US-A-3 739 329 (LESTER) * Column 2, line 50 - column 5, line 13; figures 1,3 * | 1-12 | |
| A | WO-A-8 301 139 (FIORE) * Page 11, line 25 - page 12, line 35; figure 1 * | 1-12 | |
| A | GB-A-2 179 186 (LIFEGUARD SYSTEMS) * Abstract * | 1-12 | TECHNICAL FIELDS SEARCHED (Int. Cl.5) |
| A | FR-A-2 549 262 (S.E.R.A.M.) * Abstract * | 1-12 | G 08 B G 08 G |

The present search report has been drawn up for all claims

| Place of search | Date of completion of the search | Examiner |
|---|---|---|
| THE HAGUE | 12-03-1990 | SGURA S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P0401)